Europäisches Patentamt

European Patent Office

Office européen des brevets

(11) Veröffentlichungsnummer: **0 306 799**

**A1**

(12) # EUROPÄISCHE PATENTANMELDUNG

(21) Anmeldenummer: **88114103.0**

(22) Anmeldetag: **30.08.88**

(51) Int. Cl.4: **B05D 1/06 , B05D 3/00 , B05C 19/00 , C09D 5/46**

(30) Priorität: **11.09.87 DE 3730473**

(43) Veröffentlichungstag der Anmeldung:
**15.03.89 Patentblatt 89/11**

(84) Benannte Vertragsstaaten:
**AT BE CH DE FR GB LI NL**

(71) Anmelder: **Hugo Brennenstuhl GmbH & Co.
KG ·
Seestrasse 1 - 3
D-7400 Tübingen - 9 (Pfrondorf)(DE)**

(72) Erfinder: **Weigel, Kurt
Buchenweg 1
D-7529 Forst(DE)**
Erfinder: **Schaal, Gerhard
Zollernstrasse 23
D-7400 Tübingen 9(DE)**

(74) Vertreter: **Magenbauer, Rudolf, Dipl.-Ing. et al
Patentanwälte Dipl.-Ing. Rudolf Magenbauer
Dipl.-Phys. Dr. Otto Relmold Dipl.-Phys. Dr.
Hans Vetter Hölderlinweg 58
D-7300 Esslingen(DE)**

(54) **Verfahren zum Beschichten von Gegenständen.**

(57) Es handelt sich um ein Verfahren zum Beschichten von Gegenständen mittels eines Beschichtungspulvers, das aus dem Verteilorgan einer Beschichtungsanlage austritt und durch elektrostatische Kräfte zum zu beschichtenden Gegenstand hin bewegt wird. Das Beschichtungspulver bleibt an dem Gegenstand haften und wird durch Hitzeeinwirkung und Aufschmelzen in eine zusammenhängende Materialschicht umgewandelt. Das verwendete Beschichtungspulver ist aus Pulverrohstoffen hergestellt und mit an den jeweiligen Anwendungsfall angepaßten Pulveradditiven versehen. Dabei ist vorgesehen, daß ein im wesentlichen nur aus den Pulverrohstoffen bestehendes, durch Mischen, Extrudieren und Pulverisieren hergestelltes Rohbeschichtungspulver bereitgestellt wird, dem erst nach seiner Herstellung die Additive beigegeben werden, und zwar durch Aufsprühen des jeweiligen Additivs in flüssiger Form auf die Teilchen des Rohbeschichtungspulvers, so daß diese einen Additiv-Überzug erhalten.

## Verfahren zum Beschichten von Gegenständen

Die Erfindung betrifft ein Verfahren zum Beschichten von Gegenständen mittels eines Beschichtungspulvers, das aus dem Verteilorgan einer Beschichtungsanlage austritt und durch elektrostatische Kräfte zum zu beschichtenden Gegenstand hin bewegt wird, an dem es haften bleibt und durch Hitzeeinwirkung und Aufschmelzen in eine zusammenhängende Materialschicht umgewandelt wird, wobei das Beschichtungspulver aus Pulverrohstoffen hergestellt und mit an den jeweiligen Anwendungsfall angepaßten Pulveradditiven versehen ist.

Solche Beschichtungspulver (hier und im folgenden ist, wenn von Pulver gesprochen wird, auch körniges od.dgl. Material gemeint), auch Pulverlacke genannt, werden üblicherweise dadurch hergestellt, daß man die Pulverrohstoffe und die Additive, d.h. Zusatzstoffe, miteinander vermischt und gemeinsam extrudiert, wonach das Extrudat gebrochen oder granuliert und anschließend gemahlen wird.

Auf diese Weise erhält man homogen aus den verschiedenen Stoffen bestehende Pulverteilchen. Diese beinhalten also in gleichmäßiger Verteilung z.B. ein Harz, einen Härter, ein Farbmittel usw. sowie zusätzliche Additive, die je nach dem gewünschten Beschichtungsergebnis verschieden sein können.

Ein solches Additiv wird beispielsweise von einem Verlaufmittel gebildet. Dieses soll beim Aufschmelzen an der Oberfläche der sich ergebenden Materialschicht eine solche Oberflächenspannung erzeugen, daß die Oberfläche porenfrei ist. Dabei ergibt sich regelmäßig eine leichte Apfelsinenstruktur an der Oberfläche. Einer weiteren Verbesserung des Verlaufs des Materials sind dabei dadurch Grenzen gesetzt, daß die Pulverkörner sozusagen durchtränkt mit dem Verlaufmittel sind. Es liegt daher eine Übersättigung vor, da nur das im Bereich der Pulverkornoberfläche befindliche Verlaufmittel für das Verlaufen des Materials wirksam ist. Das überschüssige, im Pulverkorninneren angeordnete Verlaufmittel kann während der Schmelzphase bei beginnender Vernetzung des Oberflächenfilms der Materialschicht nicht an die Oberfläche gelangen und kann so die Filmvernetzung instabil machen. Man kann daher nicht einfach mehr Verlaufmittel zugeben, um ein besseres Verlaufen des Materials an der Oberfläche zu erhalten. Ein höherer Gehalt an Verlaufmittel in den Pulverkörnern würde bei ausgehärteter Materialschicht eine klebrige Oberfläche ergeben. Ausserdem wäre das Beschichtungspulver in der Lagerbeständigkeit nicht stabil, da es zu Klumpenbildung neigen würde. Das Beschichtungspulver wäre daher nicht mehr oder nur unter großen Schwierigkeiten verarbeitbar, da die bei der Verarbeitung des Beschichtungspulvers verwendeten Geräte verstopfen könnten.

Ein anderes Additiv, ein Mattierungsadditiv, dient zur Herstellung eines Matteffektes, d.h. ob die erhaltene Materialschicht mehr oder weniger matt wirkt. Als solche Mattierungsmittel sind beispielsweise Polyolefine bekannt. Verwendet man Polyolefine als Mattierungsmittel, gibt es bei Verwendung des in der geschilderten Weise hergestellten Beschichtungspulvers Haftungsschwierigkeiten zwischen dem zu beschichtenden Gegenstand und der aufgebrachten Materialschicht, wenn das Polyolefin während der thermischen Schmelzphase nicht genügend hoch an die Film- oder Materialschichtoberfläche kommen kann. Hier ist wiederum wie bei den Verlaufadditiven zu berücksichtigen, daß die Pulverkörner, bedingt durch den Beschichtungspulver-Herstellungsprozess, mit dem Mattierungsmittel "durchtränkt" und somit sozusagen übersättigt sind. Die gewünschte Mattierungswirkung wird deshalb in vielen Fällen nur unbefriedigend erreicht. Auch können sich unterschiedliche Glanzgrade über die Materialschichtoberfläche hinweg ergeben.

Soll die Materialschicht eine Oberflächenstruktur aufweisen, kann ein Strukturadditiv zugegeben werden. Solche Struktur-Beschichtungspulver werden durch Einarbeitung von thixotropen Materialien, vorwiegend Siliziumdioxid-Produkte, hergestellt. Diese können in das Beschichtungspulver entweder einextrudiert oder aber auch eingemischt werden. Da mit zunehmendem Mattierungsmittelanteil die Strukturbildung zunimmt, erhält man im einextrudierten Fall, wenn also das Mattierungsadditiv im Überschuß vorhanden ist, die Struktur etwa einer starken Apfelsinenschale. Dabei ist die Struktur nach oben abgerundet. Eine so erhaltene Materialschicht wirkt, als ob der Film- oder Materialschichtverlauf schlecht wäre. Im Falle des homogenen Beimischens des Strukturadditivses kann sich hier beispielsweise um Zelluloseacetobutyrat handeln - können dagegen beim Transport oder der Verarbeitung des Pulvers Entmischungen auftreten, so daß sich keine gleichmäßig strukturierte Materialschicht ergibt.

All dies sollen nur Beispiele für die Additive und die damit zusammenhängenden Probleme sein.

Ein weiteres Problem, das bei dem bisherigen Vorgehen auftritt, ist folgendes:

Das elektrostatische Aufladen des Beschichtungspulvers erfolgt regelmäßig dadurch, daß durch ein Hochspannungsfeld Ionen erzeugt werden, die sich an die Pulverteilchen anlagern, die dann den Feldlinien des Hochspannungsfeldes entlang vom Verteilorgan zum zu beschichtenden Gegenstand gelangen. Dies führt dazu, daß das Beschichtungsergebnis vom Feldverlauf abhängig ist, der seinerseits von der Gestalt des beispielsweise auf Erdpotential liegenden Gegenstandes abhängt. Dies bedeutet, daß Gegenstandskanten oder -spitzen mehr Beschichtungspulver anziehen als Gegenstandsflächen und daß man vor allem im Falle von Gegenständen, bei denen der Faraday-Käfigeffekt auftritt, innerhalb der Gegenstände nur eine schlechte Beschichtung erhält.

Dieser Nachteil tritt nicht auf, wenn man das Beschichtungspulver nach dem sogenannten Triboverfahren elektrostatisch auflädt. Die Pulverteilchen werden hierbei durch Reibung aufgeladen, indem sie beispielsweise innerhalb des Verteilorgans (dieser wird regelmäßig von einer Pistole gebildet) an einem Kunststoffteil vorbeigeführt werden. Auf diese Weise entsteht Reibungselektrizität, wie es beispielsweise in den Offenlegungsschriften 36 00 395 und 36 00 065 beschrieben ist. Bei diesem Vorgehen entfällt das Hochspannungsfeld, so daß sich die Pulverteilchen am zu beschichtenden Gegenstand überall gleichmäßig anlagern. Dieses Vorgehen ist bekannt, kann jedoch seither nur bei auf Epoxidharzbasis hergestellten Beschichtungspulvern angewandt werden, da bei anderen Pulverlakken keine Reibungsaufladung entsteht. Wünschenswert wäre es demgegenüber, auch alle anderen Beschichtungspulver "tribofähig" zu machen, so daß sie mit Tribogeräten verarbeitet werden können.

Des weiteren liegt noch folgendes Problem vor, das auf die thermischen Bedingungen zurückzuführen ist:

Die zu beschichtenden Gegenstände können unterschiedlich dicke Teile aufweisen, die nacheinander beschichtet und dann zusammengesetzt werden. Dabei ist zum Einbrennen der Materialschicht auf dem jeweiligen Gegenstandsteil für dickwandigere Teile eine höhere Einbrenntemperatur als bei dünnwandigen Teilen erforderlich. Würde man bei dünnwandigen Teilen die für dickwandige Teile benötigte Einbrenntemperatur verwenden, würde die zu viel zugeführte Wärme bei hellfarbigen Farbtönen zu einer Wärmevergilbung mit entsprechender Farbtonverschiebung führen. Arbeitet man dagegen bei dickwandigen Gegenstandsteilen mit der bei dünnwandigen Teilen ausreichenden Einbrenntemperatur, sind die dickwandigen Teile nicht ausreichend thermisch-chemisch vernetzt. Die Folge sind schlechte Werte in der Materialschichthaltbarkeit, Abblättern der Materialschicht, ungenügender Korrosionsschutz usw. Somit müßte man also, um ein optimales Einbrennergebnis zu erhalten, beim Übergang von dünnwandigen zu dickwandigen Gegenstandsteilen und umgekehrt jeweils die Temperatur des Einbrennofens neu einstellen. Ein solches häufiges Umstellen der Einbrennofentemperatur ist jedoch unrealistisch, da sich die neue Temperatur nur träge einstellt. Daher wird in der Praxis bei der Einbrenntemperatur häufig ein Kompromiß mit entsprechend verschlechterntem Beschichtungsergebnis gewählt.

In thermischer Hinsicht ist auch noch folgendes zu beachten:

Bei der Beschichtungspulverherstellung mittels eines Extruders treten Temperaturen von 120°C und größer auf. Bei diesen Temperaturen dürfen noch keine Reaktionen in oder zwischen den das Beschichtungspulver ergebenden Stoffen auftreten. Dies wird durch die Zugabe eines Katalysatoradditivs erreicht, die eine Stabilität bis etwa 180°C bewirken. Dementsprechend hoch muß die Einbrenntemperatur beim Aufschmelzen und Einbrennen der Materialschicht am zu beschichtenden Gegenstand sein, obwohl zum Aufschmelzen und Einbrennen eine in der Höhe des Erweichungspunktes des verwendeten Pulverlackharzes liegende Einbrenntemperatur ausreichen würde. Die gegenüber der Erweichungstemperatur des Beschichtungspulvers aus dem genannten Grunde weit erhöhte Einbrenntemperatur bedeutet hohe Energiekosten.

Ein weiterer Nachteil des bisherigen Vorgehens ist es, daß für jeden Anwendungsfall ein insgesamt gesondert hergestelltes Beschichtungspulver erforderlich ist, so daß der Anwender keinerlei Variationsmöglichkeiten besitzt.

Ferner ergibt sich aus dem obigen, daß, da die Additive homogen in den Pulverteilchen enthalten sind, eine verhältnismäßig große Additivmenge benötigt wird, von der nur die im Bereich der Teilchenoberfläche befindliche Teilmenge wirksam ist. Dies bedeutet zunächst einen unnötig großen Materialaufwand. Ferner können sich die zu großen Additivmengen auf andere Eigenschaften als die dem jeweiligen Additiv zugeordnete Eigenschaft der sich ergebenden Materialschicht auswirken. So wird beispielsweise bei der Mattierung von Pulverlacken mittels siliziumhaltigen Materialien das Verlaufen der Materialschicht negativ beeinträchtigt, indem sich ein stärkerer Apfelsinenschaleneffekt ergibt.

Des weiteren muß bei der Pulverherstellung darauf geachtet werden, daß die Additive untereinander und mit den Rohstoffen verträglich sind, wodurch die Herstellungsmöglichkeiten eingeschränkt werden.

Prinzipiell könnte man manchen der geschilderten Probleme dadurch begegnen, daß man die Additive nicht einextrudiert sondern dem Geschichtungspulver in Pulverform beimischt. Hierdurch würden jedoch neue Schwierigkeiten entstehen, so beispielsweise die Gefahr einer Entmischung, also einer inhomogenen Verteilung des Additivpulvers, was zu unregelmäßigen Materialschichten führt. Ausserdem sind derartige Additivpulver extrem fein, so daß in der Beschichtungsanlage enthaltene Filteranlagen verstopfen können. Bei Zyklonen ohne Nachfilter kann das Additivpulver direkt in die Atmosphäre gelangen und die Umwelt belasten. Ausserdem würden die extrem feinen Additivpulver bei der Pulverrückgewinnung innerhalb des Beschichtungsanlage (das an dem Gegenstand nicht anhaftende Pulver fällt nach unten und wird üblicherweise zurückgewonnen) verloren gehen.

Nach alledem liegt der vorliegenden Erfindung die Aufgabe zugrunde, ein Verfahren der eingangs genannten Art zu schaffen, bei dem die geschilderten Probleme und Nachteile beseitigt sind.

Diese Aufgabe wird erfindungsgemäß dadurch gelöst, daß ein im wesentlichen nur aus den Pulverrohstoffen bestehendes, in bekannter Weise durch Mischen, Extrudieren und Pulverisieren hergestelltes Rohbeschichtungspulver bereitgestellt wird, dem erst nach seiner Herstellung die an den jeweiligen Anwendungsfall angepaßten Additive, z.B. ein Reibungsadditiv zum Erzeugen einer elektrostatischen Aufladung des Beschichtungspulvers durch Reibung im Bereich des Verteilorgans und/oder ein die Reaktionstemperatur der Pulverbestandteile bestimmendes Katalysatoradditiv und/oder ein die Oberflächenstruktur der sich ergebenden Materialschicht beeinflußendes Strukturadditiv und/oder ein die Mattierung der Materialschicht bestimmendes Mattierungsadditiv und/oder ein die Verlaufeigenschaften des Pulvers beim Aufschmelzen beeinflussendes Verlaufadditiv, beigegeben werden, und zwar durch Aufsprühen des jeweiligen Additivs in flüssiger Form auf die Teilchen des Rohbeschichtungspulvers, so daß diese einen Additiv-Überzug erhalten.

Bei dem erfindungsgemäßen Vorgehen wird nur das Rohpulver wie üblich hergestellt. Dieses Rohpulver ist für die verschiedenstartigen Anwendungen geeignet, da man jeweils nur die für den bestimmten Anwendungsfall geeigneten Additive aufsprühen muß. Es ist also nicht mehr so, daß man für jeden Anwendungsfall ein gesondertes Beschichtungspulvers herstellen muß. Auf diese Weise wird die Lagerhaltung vereinfacht. Auch kann man das Beschichtungspulver in seinen gewünschten Eigenschaften optimieren.

So kann man beispielsweise praktisch jedes Rohpulver oder nachträglich auch jedes nach dem herkömmlichen Verfahren hergestellte Beschichtungspulver mit einem "tribofähigen" Reibungsadditiv überziehen, um durch Reibungselektrizität die für das Aufbringen des Pulvers vom Verteilorgan auf den zu beschichtenden Gegenstand erforderliche elektrostatische Aufladung zu erhalten. Dabei kann man in bestimmten Grenzen die Reibungsaufladung sogar steuern, indem man die aufgesprühte Additivmenge variiert. Im Falle höherer Aufladung, was durch einen dickeren Überzug mit dem Reibungsadditiv erreicht wird, erhält man bei vorgegebener Beschichtungspulvermenge eine dickere Materialschicht am Gegenstand, bei niedrigerer Aufladung wird weniger Material am Gegenstand abgeschieden. Das Ausmaß der Reibungsaufladung ist auch bestimmend für die Adhäsionskräfte zwischen dem jeweiligen Pulverlackkorn und dem zu beschichtenden Gegenstand, so daß man die gewünschte Adhäsionskraft ebenfalls genau einstellen kann, was vor allem bei kompliziert geformten zu beschichtenden Gegenständen von Vorteil ist. Somit kann man auch seither nicht "tribofähige" Materialien durch Aufsprühen eines Reibungsadditivs "tribofähig" machen, und zwar in genau dosierter Weise. Es versteht sich, daß das Reibungsadditiv ein solcher Stoff ist, der beim Vorbeiströmen an einem Isolator eine elektrostatische Aufladung erhält.

Da die Additive nicht einextrudiert werden, muß bei der Herstellung des Rohpulvers auch nicht auf deren evtl. Reaktion Rücksicht genommen werden. Dies bedeutet, daß man bei dem erfindungsgemäßen Vorgehen nachträglich ein Katalysatoradditiv aufsprühen kann, dessen "Sprungtemperatur", bei der die Reaktionen ablaufen, gegenüber seither herabgesetzt ist. Man kann also Katalysatoradditive benutzen, die etwa bei der Erweichungstemperatur des verwendeten Pulverlackharzes wirksam werden, so daß man die Einbrenntemperatur entsprechend erniedrigen kann. Dies bedeutet eine Energieeinsparung. Anstelle mit erniedrigter Einbrenntemperatur kann man auch wie seither mit hoher Einbrenntemperatur arbeiten, wobei man dann wegen der früher einsetzenden Reaktion eine verkürzte Einbrennzeit erhält, so daß die Gegenstände schneller fertig beschichtet sind.

Aus dem nunmehr möglichen Einbrennen der Materialschicht bei niedrigeren Temperaturen resultiert auch eine Erweiterung des Anwendungsgebiets der Pulverbeschichtung. Seither war es aus thermischen Gründen nicht möglich, Gegenstände beispielsweise aus glasfaserverstärktem Kunststoff z.B. auf der Basis Epoxidharz, aus ungesättigten Polyesterharzen, Holz oder holzhaltigen Materialien (Spanplatten) mit einer Pulverlackbeschichtung zu versehen. Dies ist dagegen jetzt möglich.

Weiter oben wurde u.a. der Nachteil des bisherigen Vorgehens erläutert, daß man bei unterschiedlich dicken Gegenstandsteilen mit einer anderen Ofentemperatur fahren sollte. Auch dies wird jetzt hinfällig, da man nur die aufgesprühte Menge an Katalysatoradditiv zu variieren braucht. Die Ofentemperatur kann dann immer die gleiche bleiben.

In gleicher Weise kann man auch die anderen Additive wie Verlaufadditiv, Strukturadditiv und Mattierungsadditiv genau dosiert aufbringen. Da diese nur eine Überzug der Pulverkörner bilden, sind sie ausschließlich an der Stelle vorhanden, wo sie ihre Wirksamkeit entfalten. Somit kann man je nach dem gewünschten Effekt auch eine seither nicht mögliche große wirksame Menge des jeweiligen Additivs zur Anwendung bringen, ohne daß unerwünschte Nebeneffekte auftreten, die beim seitherigen Vorgehen aus der überschüssigen, im Pulverkorninneren enthaltenen Additivmenge resultieren.

Ein weiterer Vorteil ist die erhöhte Lagerstabilität. Während die seitherigen Beschichtungspulver, die einschließlich der Additive vollständig hergestellt werden, im Laufe der Zeit altern und beispielsweise verklumpen, wonach sie nicht mehr verwendbar sind, kann man beim erfindungsgemäßen Vorgehen das Rohpulver einerseits und die Additive andererseits praktisch beliebig lange gesondert voneinander lagern.

Zweckmäßigerweise wird das Rohbeschichtungspulver und das oder die Additive dem Anwender getrennt zur Verfügung gestellt. Der Anwender, d.h. der die Gegenstände beschichtende Betrieb, kann sich dann sein an den jeweiligen Anwendungsfall angepaßtes Beschichtungspulver selbst zusammenstellen. Ausserdem erfolgt in einem solchen Falle ein getrennter Transport des Rohbeschichtungspulvers und der Additive zum Anwender, so daß sich beim Transport in heißen Gegenden auftretende hohe Temperaturen nicht nachteilig auf die Pulverqualität auswirken können.

Es ist möglich, das oder die Additive erst beim Beschichtungsvorgang, z.B. innerhalb des Verteilorgans oder im Pulvervorratsbehälter der Beschichtungsanlage, auf die Teilchen des Rohbeschichtungspulvers aufzusprühen. Auf diese Weise können das Rohbeschichtungspulver und die Additive bis zum spätest möglichen Zeitpunkt gesondert voneinander gelagert werden. Nachteilig ist jedoch folgendes:

In der Beschichtungskammer oder -kabine, in der das Beschichtungspulver zum zu beschichtenden Gegenstand fliegt, haftet nicht das ganze Beschichtungspulver an dem jeweiligen Gegenstand. Stets fällt eine gewisse Menge des Beschichtungspulvers nach unten oder rieselt am zu beschichtenden Gegenstand herab. Diese Pulvermenge wird bei Beschichtungsanlagen mit einer Rückgewinnung vom Boden der Kammer oder Kabine zum Pulvervorratsbehälter zurückgeführt, aus dem das Beschichtungspulver zum Verteilorgan gelangt. Da nun, sprüht man die Additive erst beim Beschichtungsvorgang auf, die zurückgeführten Pulverteilchen bereits einen Additivüberzug aufweisen, erhalten sie beim neuerlichen Durchgang einen zweiten Additivüberzug, während die zusammen mit ihnen aus dem Verteilorgan austretenden frischen Pulverteilchen nur einen Überzug besitzen. Da sich dieser Vorgang wiederholt, können die Teilchen nicht nur zweimal sondern entsprechend häufig immer wieder mit einem Überzug versehen werden. Es liegen dann keine definierten Verhältnisse mehr vor und schon nach kurzer Zeit wäre der Pulverstrom mit der Flüssigphase des Additivs überlastet.

Daher ist es zweckmäßiger, daß das oder die Additive in einem gesonderten Aufsprühbehälter auf das Rohbeschichtungspulver aufgesprüht werden, aus dem es, gegebenenfalls über einen Zwischenbehälter, in den Pulvervorratsbehälter der Beschichtungsanlage umgefüllt wird. Auf diese Weise wird ein erneutes Besprühen des rückgewonnenen Pulvers vermieden.

Während des Aufsprühens des oder der Additive kann man das Rohbeschichtungspulver beispielsweise mittels eines Luftstroms aufwirbeln.

Eine zweckmäßige Beschichtungsanlage zur Durchführung des Verfahrens ist dadurch gekennzeichnet, daß der Aufsprühbehälter oder der Zwischenbehälter über eine eine Fördereinrichtung enthaltende Förderleitung mit dem Pulvervorratsbehälter verbunden ist, wobei am Pulvervorratsbehälter eine Füllstanzmesseinrichtung vorhanden ist, die den Betrieb der Fördereinrichtung steuert. Leert sich der Pulvervorratsbehälter der Beschichtungsanlage, aus dem das Pulver zum Verteilorgan gelangt, schaltet bei einer unteren Füllstanzhöhe die Messeinrichtung die Fördereinrichtung ein, so daß eine neue Menge an verarbeitungsfähigem, d.h. bereits besprühtem Pulver, in den Pulvervorratsbehälter überführt wird. Ist eine obere Füllstanzhöhe erreicht, schaltet sich die Fördereinrichtung ab.

Ein zweckmäßiger Aufsprühbehälter zur Durchführung des Verfahrens ist dadurch gekennzeichnet, daß er eine Sprühdüse für das Einsprühen des oder der Additive und eine Aufwirbelungseinrichtung, z.B. eine Rütteleinrichtung oder eine Gebläseeinrichtung, zum Aufwirbeln des Rohbeschichtungspulvers aufweist.

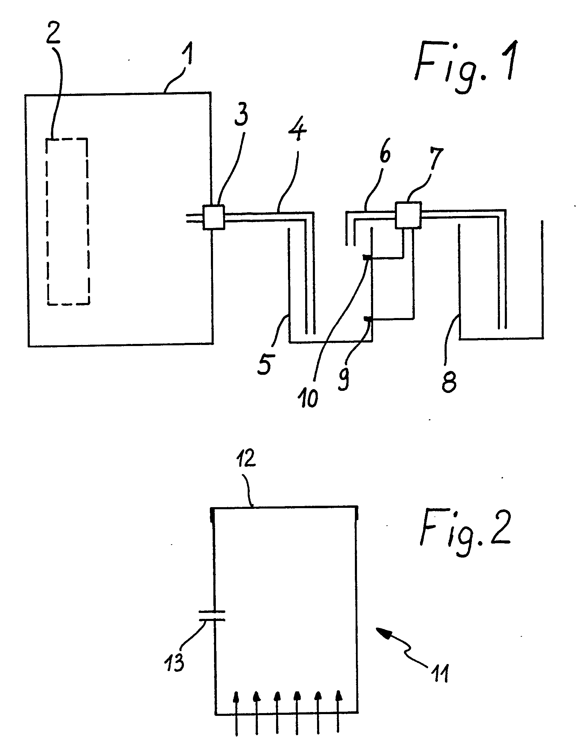

Im folgenden wird noch anhand der Fig. 1 die soeben erwähnte Beschichtungsanlage und anhand der Fig. 2 der erwähnte Aufsprühbehälter kur erläutert. Dabei handelt es sich nur um grob schematische Darstellung.

In einer Beschichtungskammer oder -kabine 1 einer Pulverbeschichtungsanlage befindet sich ein zu beschichtender Gegenstand 2. Derartige Beschichtungskammern sind allgemein bekannt, so daß sich eine Beschreibung ihres Aufbaus und ihrer Einzelheiten erübrigt. In die Kabine 1 mündet ein Verteilorgan 3 beispielsweise in Gestalt einer Pistole, von dem aus das Beschichtungspulver aufgrund elektrostatischer Kräfte zum Gegenstand 2 gelangt, wo es haften bleibt, aufschmilzt und eingebrannt wird. Das Verteilorgan 3 ist über eine Zufuhrleitung 4 mit einem Pulvervorratsbehälter 5 verbunden. Die Fördermittel zum Überführen des im Pulvervorratsbehälter 5 befindlichen Pulvers durch die Leitung 4 zum Verteilorgan 3 sind ebenfalls nicht eingezeichnet. Der Pulvervorratsbehälter 5 ist seinerseits über eine Förderleitung 6 mit einer Fördereinrichtung 7 mit einem Zwischenbehälter 8 verbunden. Das mit dem Additivüberzug versehene Pulver wird in den Zwischenbehälter 8 eingefüllt und gelangt aus diesem mittels der Fördereinrichtung 7 durch die Förderleitung 6 in den Vorratsbehälter 5. Dabei ist die Anordnung ferner so getroffen, daß am Pulvervorratsbehälter 5 eine Füllstanzmesseinrichtung vorhanden ist, die einen unteren Füllstanzfühler 9 und einen oberen Füllstanzfühler 10 enthält. Erreicht das aus dem Zwischenbehälter 8 überführte Pulver den oberen Füllstanzfühler 10, schaltet dieser die Fördereinrichtung 7 ab. Anschließend wird das im Vorratsbehälter 5 befindliche Pulver mittels des Verteilorgans 3 zum zu beschichtenden Gegenstand 2 gesprüht. Senkt sich im Laufe der Zeit die Pulvermenge im Vorratsbehälter 5 bis zum unteren Füllstanzfühler 9 ab, schaltet dieser die Fördereinrichtung 7 wieder ein. Auf diese Weise kann die Beschichtungsanlage kontinuierlich arbeiten, wobei man nur immer wieder den Zwischenbehälter 8 mit frischem Beschichtungspulver füllen muß.

Der Aufsprühbehälter 11 gemäß Fig. 2 besitzt im wesentlichen einen üblichen Behälteraufbau und ist oben durch einen Deckel 12 abgeschlossen, so daß sein Innenraum nach aussen hin abgedichtet ist. In den Aufsprühbehälter 11 mündet eine Sprühdüse 13, durch die hindurch das jeweilige Additiv in flüssiger Form eingesprüht wird. In dem Behälter 11 befindet sich das Rohbeschichtungspulver (punktiert angedeutet), das mittels einer Aufwirbelungseinrichtung aufgewirbelt wird. Das Aufwirbeln kann sehr einfach dadurch erfolgen, daß man beispielsweise an der Behälterunterseite Luft einbläst (siehe die eingezeichneten Pfeile). Das versprühte Additiv lagert sich an die aufgewirbelten Rohpulverteilchen an, so daß diese mit einem Additiv-Überzug versehen werden. Ist dieser Vorgang beendet, steht das Beschichtungspulver zur Verarbeitung in der Beschichtungsanlage zur Verfügung und kann beispielsweise in den Zwischenbehälter 8 eingefüllt werden.

## Ansprüche

1. Verfahren zum Beschichten von Gegenständen mittels eines Beschichtungspulvers, das aus dem Verteilorgan einer Beschichtungsanlage austritt und durch elektrostatische Kräfte zum zu beschichtenden Gegenstand hin bewegt wird, an dem es haften bleibt und durch Hitzeeinwirkung und Aufschmelzen in eine zusammenhängende Materialschicht umgewandelt wird, wobei das Beschichtungspulver aus Pulverrohstoffen hergestellt und mit an den jeweiligen Anwendungsfall angepaßten Pulveradditiven versehen ist, dadurch gekennzeichnet, daß ein im wesentlichen nur aus den Pulverrohstoffen bestehendes, in bekannter Weise durch Mischen, Extrudieren und Pulverisieren hergestelltes Rohbeschichtungspulver bereitgestellt wird, dem erst nach seiner Herstellung die an den jeweiligen Anwendungsfall angepaßten Additive, z.B. ein Reibungsadditiv zum Erzeugen einer elektrostatischen Aufladung des Beschichtungspulvers durch Reibung im Bereich des Verteilorgans und/oder ein die Reaktionstemperatur der Pulverbestandteile bestimmendes Katalysatoradditiv und/oder ein die Oberflächenstruktur der sich ergebenden Materialschicht beeinflussendes Strukturadditiv und/oder ein die Mattierung der Materialschicht bestimmendes Mattierungsadditiv und/oder ein die Verlaufeigenschaften des Pulvers beim Aufschmelzen beeinflussendes Verlaufadditiv, beigegeben werden, und zwar durch Aufsprühen des jeweiligen Additivs in flüssiger Form auf die Teilchen des Rohbeschichtungspulvers, so daß diese einen Additiv-Überzug erhalten.

2. Verfahren nach Anspruch 1, dadurch gekennzeichnet, daß das Rohbeschichtungspulver und das oder die Additive dem Anwender getrennt zur Verfügung gestellt werden.

3. Verfahren nach Anspruch 2, dadurch gekennzeichnet, daß das oder die Additive erst beim Beschichtungsvorgang z.B. innerhalb des Verteilorgans oder im Pulvervorratsbehälter der Beschichtungsanlage, auf die Teilchen des Rohbeschichtungspulvers aufgesprüht werden.

4. Verfahren nach Anspruch 1 oder 2, dadurch gekennzeichnet, daß das oder die Additive in einem gesonderten Aufsprühbehälter (11) auf das Rohbeschichtungspulver aufgesprüht werden, aus dem es, gegebenenfalls über einen Zwischenbehälter (8), in den Pulvervorratsbehälter (5) der Beschichtungsanlage umgefüllt wird.

5. Verfahren nach Anspruch 4, dadurch gekennzeichnet, daß das Rohbeschichtungspulver während des Aufsprühens des oder der Additive beispielsweise mittels eines Luftstroms aufgewirbelt wird.

6. Aufsprühbehälter zur Durchführung des Verfahrens nach Anspruch 4 oder 5, dadurch gekennzeichnet, daß er eine Sprühdüse (13) für das Einsprühen des oder der Additive und eine Aufwirbelungseinrichtung, z.B. eine Rütteleinrichtung oder eine Gebläseeinrichtung, zum Aufwirbeln des Rohbeschichtungspulvers aufweist.

7. Beschichtungsanlage zur Durchführung des Verfahrens nach Anspruch 4 oder 5, dadurch gekennzeichnet, daß der Aufsprühbehälter oder der Zwischenbehälter (8) über eine eine Fördereinrichtung (7) enthaltende Förderleitung (6) mit dem Pulvervorratsbehälter (5) verbunden ist, wobei am Pulvervorratsbehälter (5) eine Füllstanzmesseinrichtung (9,10) vorhanden ist, die den Betrieb der Fördereinrichtung (7) steuert.

7

*Fig.1*

*Fig.2*

## EINSCHLÄGIGE DOKUMENTE

EP 88114103.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - A1 - 3 600 808 (ESB ELEKTRO-STATISCHE SPRÜH- UND BESCHICHTUNGS-ANLAGEN) <br><br> * Gesamt * <br><br> -- | 1 | B 05 D 1/06 <br><br> B 05 D 3/00 <br><br> B 05 C 19/00 <br><br> C 09 D 5/46 |
| D,A | DE - A1 - 3 600 065 (WEIGEL) <br><br> * Gesamt * <br><br> -- | 1 | |
| D,A | DE - A1 - 3 600 395 (WEIGEL) <br><br> * Patentansprüche * <br><br> ---- | 1 | |

RECHERCHIERTE SACHGEBIETE (Int. Cl.4)

B 05 D

B 05 C

B 05 B

C 09 D

Der vorliegende Recherchenbericht wurde für alle Patentansprüche erstellt.

| Recherchenort | Abschlußdatum der Recherche | Prüfer |
|---|---|---|
| VIENNA | 28-11-1988 | SCHÜTZ |